# EUROPEAN PATENT SPECIFICATION

(11) **EP 2 882 586 B1**
(45) Date of publication and mention of the grant of the patent: **25.05.2016**
(21) Application number: 13732196.4
(22) Date of filing: 28.06.2013
(51) Int. Cl.: B32B 7/06, B32B 27/00, B32B 27/32, B32B 27/36, B32B 27/40, A01G 9/14, B65D 90/04, B32B 7/04, B32B 27/06, B32B 27/08, B32B 27/30

(54) **MULTILAYER PLASTIC FILM WITH SEPARABLE LAYERS FOR COVERING OF INFLATED GREENHOUSE**
MEHRSCHICHTIGE KUNSTSTOFFFOLIE MIT TRENNBAREN SCHICHTEN ZUM ABDECKEN EINES AUFGEBLASENEN GEWÄCHSHAUSES
FILM DE MATIÈRE PLASTIQUE MULTI-COUCHES COMPRENANT DES COUCHES SÉPARABLES POUR LA COUVERTURE D'UNE SERRE GONFLÉE

(30) Priority: 08.08.2012 GB 201214177
(43) Date of publication of application: 17.06.2015
(73) Proprietor: Plastika Kritis S.A., 711 10 Crete (GR)
(72) Inventor: LEMPIDAKIS, Ioannis, GR-711 10 Iraklion, Crete (GR); LEMPIDAKIS, Emmanouil, GR-711 10 Iraklion, Crete (GR); LEMPIDAKIS, Michail, GR-711 10 Iraklion, Crete (GR); MELAS, Ioannis, GR-711 10 Iraklion, Crete (GR); VERTOUDAKIS, Konstantinos, GR-711 10 Iraklion, Crete (GR)
(74) Representative: Gill Jennings & Every LLP
(86) International application number: PCT/EP2013/063722
(87) International publication number: WO 2014/023479

(56) References cited:
- EP-A2- 0 159 165
- WO-A1-2012/143289
- WO-A2-2011/057752
- GB-A- 1 550 488
- JP-A- S5 499 181
- JP-A- 2009 095 296
- JP-A- 2010 110 261
- US-A1- 2008 261 050

## Description

### Field of the Invention

The present invention relates to a multilayered polymeric film or sheet having layers that are capable of delamination, suitable for use in combination with agricultural structures, such as greenhouses or agricultural tunnels, and for packaging applications. More particularly, the invention is directed to a polymeric film comprising at least two adjacent layers of different polymeric composition, wherein the layers do not significantly adhere to one another and are thus separable post-production. The polymeric film or sheet is co-extruded using known extrusion blown or cast techniques.

### Background of the Invention

Greenhouses or other agricultural structures, such as agricultural tunnels, may be covered with flexible films comprising polymeric materials that are tailored to provide a favourable environment for the cultivation of crops and plants. The covers are employed to provide protection for the crops grown underneath from adverse weather conditions and to create a greenhouse effect by selectively filtering solar radiations.

The composition of the polymeric film is important and, in particular, should provide the film with: adequate mechanical properties, including resistance to tears, film elongation and stresses from atmospheric agents; high levels of light transmittance, especially in the region of chlorophyll photosynthesis; capacity to absorb radiation in the far infrared region of the spectrum, i.e. from 7000 to 13000 nm; and good light stability for an extended lifetime.

To obtain better thermal insulation during the night and reduce energy consumption, such greenhouses may use several separate films to create a layered structure that is subsequently inflated. For example, the greenhouses are covered with two, or rarely three, separate films which are individually installed one above the other and then air is inserted between them to keep them apart. This practice is thought to achieve better thermal insulation and also help in the case of strong winds and snow, as the air between the layers helps to keep the structure well tensioned and prevents any mechanical fatigue that would result from uncontrolled movement in the wind. The lifetime of plastic films on inflated greenhouses is also improved compared to single film uninflated greenhouses.

The covering for inflated greenhouses is achieved with two or rarely three films, exhibiting the same or different characteristics. The films are laid on the greenhouse structure and fixed with special clips or profiles, one after the other. In some geographical regions a single tube is laid on the structure and fixed. In both cases, after fixing the films or tube, air is inserted to keep the films or the two sides of the tube apart.

In practice, the installation process is not easy because the films must be unrolled and unfolded at heights of from 4 to 6 meters from the ground and on long lengths, usually from 50 to 100 meters, and then fixed at the sides of the span throughout their length. Afterwards, the same process has to be repeated for the second film and so on. If during the installation there are winds, there is a danger of the films being torn and for the installers to be injured. Due to these reasons and also due to the time it takes to install the two (or more) films, the process is rather expensive.

Using tubes also has disadvantages because the upper and lower film cannot be different, as required by best practices (e.g. a non-thermic mechanically strong upper film and a thermic film with anti-dripping characteristics on the lower one), and also because there are limitations on the width of the span (tubes are typically less than 8 meters), because greenhouse film tubes are currently made with a circumference of up to 16 meters at most.

WO97/00006 describes a greenhouse film having variable light diffusion properties. In one embodiment, the film may be combined with a separate, clear low density polyethylene film to produce a double-skin cover capable of being attached to a greenhouse structure and inflated with air.

PCT/EP2012/056717 also discloses greenhouse films capable of delamination. The films described therein comprise a layer containing polyamide and/or ethylene vinyl alcohol, in combination with another polymeric layer. However it would still be desirable to provide alternative films which allow easier processing and/or impart improved properties.

WO 96/11108 discloses a greenhouse film comprised of nylon, which is used in the inner layer in respect to the greenhouse roof. However, the nylon layer of the film is bonded to an adjacent layer, making the film unsuitable for delamination. The film is also not related to inflated greenhouses.

WO 2011/057752 discloses a silage covering comprising a so called "first layer" on one side (facing the silo). Various materials are disclosed for this "first layer".

JP 2009/095296A discloses an agricultural greenhouse structure covered by two separate polyolefin-based cover films. Air is introduced between the two films to form an inflated structure.

Accordingly, there is still a need for an improved polymeric film that can be used in association with agricultural structures, such as greenhouses, agricultural tunnels, animal husbandry buildings, plant expositions etc. There is also a need for an inflatable film exhibiting excellent mechanical and optical properties that can be installed in a faster and simpler way, to a variety of shaped greenhouses.

### Summary of the Invention

In accordance with a first aspect of the invention, there is provided a multilayered polymeric film for covering an agricultural structure or greenhouse, wherein the film contains (i) at least one layer comprising a polypropylene, polybutene, thermoplastic polyurethane, polyester, or combinations of two or more thereof, and (ii) at least one further polymer layer connected thereto, characterised in that layer (i) and layer (ii) have an average delamination strength of less than 250 g/15 mm when measured using ASTM D-1876, the at least one further polymer layer (ii) comprises a polymeric material selected from the group consisting of polyethylene, ethylene vinyl acetate copolymer, ethylene butyl acrylate copolymer and combinations of two or more thereof; and the film has a luminous transmittance greater than 30% when measured using ASTM-D1003-92. Preferably, the delamination is effected *in situ, i.e.,* when in use with an agricultural structure or greenhouse.

The difference in chemical composition between said layers identified above, and/or their associated physical properties, means that they do not significantly adhere to one another and thus delaminate easily with the application of a relatively low amount of force to the layers, such as the application of fluid (preferably air) pressure, between the layers.

In accordance with a second aspect of the invention, there is provided a multilayered polymeric film for covering an agricultural structure or greenhouse, wherein the film contains (i) at least one layer comprising a polypropylene, polybutene, thermoplastic polyurethane, polyester, or combinations of two or more thereof, and (ii) at least one further polymer layer, characterised in that at least 80% of layer (i) and layer (ii) are delaminated, the at least one further polymer layer (ii) comprises a polymeric material selected from the group consisting of polyethylene, ethylene vinyl acetate copolymer, ethylene butyl acrylate copolymer, and combinations of two or more thereof, and the film has a luminous transmittance greater than 30% when measured using ASTM-D1003-92.

Delamination of the film allows a gas, preferably air, to be inserted between the separable layers of the polymeric film and creates a thermally efficient structure when the film is used in association with an agricultural structure, such as a greenhouse or tunnel.

In accordance with a third aspect of the invention, there is provided an agricultural structure or greenhouse, characterised in that the structure comprises a polymeric film according to the first or second aspects of the invention. The film in its inflated form creates a thermally insulating layer for improved thermal economy and provides a more physically robust nature to the entire structure.

In accordance with a fourth aspect of the invention, there is provided a method of covering an agricultural structure or greenhouse with the polymeric film according to the first aspect of the invention, comprising the step of inserting gas between (i) the at least one layer comprising the polypropylene, polybutene, thermoplastic polyurethane, polyester, or combinations of two or more thereof and (ii) the at least one further polymer layer, selected from the group consisting of polyethylene, ethylene vinyl acetate copolymer, ethylene butyl acrylate copolymer and combinations of two or more thereof. The process is typically carried out *in situ* when the film is in combination with the agricultural structure and thus allows the film to be easily transported in a rolled, deflated form for erection on site.

The inventors have found that the polymeric composition of adjacent layers is important in providing a film in which specific layers do not significantly adhere to one another. They have also found that these layers may be delaminated by introducing air (at elevated pressure) between the layers that do not significantly adhere to one another and thus provide a single film product capable of being employed as an inflatable film with agricultural structures.

The film of the present invention is advantageous because it can be installed on a greenhouse or related agricultural structure in a single process, can be fixed in a faster and simpler way and then two or more layers can be separated by inserting air between them. This reduces the risks involved with the installation process (such as resistance to tear) and reduces the costs of production, because only a single film is required rather than two or three separate films as is currently required for inflated greenhouses. The present film also improves thermal insulation.

Another advantage is the impact on logistics, since instead of using two different types of film, for example one non-thermic for the outer film and one thermic anti-drip for the inner film as is usually done, only one film is used and can be transported much more easily.

### Detailed Description of the Invention

The present invention discloses a multilayered polymeric film for use in combination with agricultural structures. A large variety of structures are available for plant growth purposes including traditional frame greenhouses, geodesic frame greenhouses and tunnel greenhouses. The invention described herein is particularly suited to commercial scale greenhouses. The film may be used for a portion or the whole of the greenhouse. The term greenhouse is used to mean any form of agricultural structure exposed to sunlight, within which a cultivation area is defined for the growth of crops, plants and the like or for the presentation and sale of ready plants. It is also used to define any metallic or wooden structure covered by plastic film that can be used for a variety of applications, such as a warehouse, as an animal husbandry building, as a temporary shelter for people etc.

The polymeric film according to the invention includes at least two adjacent layers which are composed of different polymeric materials. The difference may be chemical composition or physical attributes, preferably chemical composition. The difference in composition allows the layers to be delaminated after the film has been produced, since the layers do not significantly adhere to one another or become irreversibly bonded as a result of the production process. At least one of the aforementioned layers of the film is comprised of a polypropylene, polybutene, thermoplastic polyurethane, polyester, or combinations of two or more thereof. In a preferred embodiment, the layer is comprised of a polypropylene, polybutene, thermoplastic polyurethane, or combinations of two or more thereof. In a more preferred embodiment the layer is comprised of a polypropylene. At least another layer of the film is comprised of polyethylene, ethylene vinyl acetate copolymer, ethylene butyl acrylate copolymer or combinations of two or more thereof.

The terms "facile delamination" and "the layers do not significantly adhere" means that the layers preferably retain a unitary structure until a sufficient delaminating force is applied. Such a force is preferably achieved by blowing air (or other fluids) between the layers. Such a force may also be achieved by at least a part of the film being delaminated by hand (for example by rubbing or pulling the layers apart).

Such a method is usually used to initiate the delamination, which is completed by the application of air pressure.

In applications having different end uses for the film, special tie-materials or other adhesive materials have been used when such polymer layers are present in order to ensure that sufficient adhesion is achieved. Nevertheless, even if tie-materials are not employed, it is not known in the art that an inflatable film can be made by delaminating adjacent layers that do not significantly adhere to one another.

Thus, the present inventors have found that by using (i) at least one layer comprising polypropylene, polybutene, thermoplastic polyurethane, polyester, or combinations of two or more thereof, in conjunction with (ii) at least one further polymer layer comprising polyethylene, ethylene vinyl acetate copolymer, ethylene butyl acrylate copolymer or combinations of two or more thereof, it is possible to then easily delaminate the layered structure and produce an inflatable film as a single product with a layer of air between the aforementioned layers of the film. It is also within the scope of this invention to have additional layers in the film which contain tie-materials.

In a further embodiment, there is provided a polymeric film comprising three, four, five, six, seven, eight, nine, ten or more layers, in which two or more of the layers are capable of being delaminated, for example 3, 4 or 5 of the layers are capable of being delaminated. For example, the film may contain at least three layers in which it is possible to delaminate each layer and provide an inflated product sandwiching at least two layers of air. A film with two or more layers of air can result in greater thermal insulation than a film with one layer of air.

In the case of an arrangement in which three layers are delaminated, at least one of these is comprised of a polypropylene, polybutene, thermoplastic polyurethane, polyester, or combinations of two or more thereof. Usually such a layer is the middle of the three layers and is enclosed by two other layers comprised of polymers that do not significantly adhere to it. However, it is also possible that the two outside layers are comprised of a polypropylene, polybutene, thermoplastic polyurethane, polyester, or combinations of two or more thereof and the middle layer is comprised of a polymer that does not significantly adhere to it. In both of these cases, it is possible to delaminate the non-bonded layers to provide a film with two layers of air separating the polymer layers. Thus it is possible to produce a triple layer inflated greenhouse film for even further enhanced insulation properties. It is also possible to apply this principle to even higher numbers of layers to produce a film with three or more insulating air layers.

The layer (i) comprising the polypropylene, polybutene, thermoplastic polyurethane, polyester, or combinations of two or more thereof preferably contains greater than 20 wt% of said polymer, preferably greater than 50 wt%, more preferably greater than 60 wt%, even more preferably greater than 75 wt%, most preferably greater than 90% thereof.

Polypropylene according to the present invention is not limited to a particular type. It may be a homopolymer, random copolymer, impact copolymer or block copolymer. Random copolymer of polypropylene is preferred since it provides high clarity as well as good flexibility and good mechanical properties. Other polypropylene polymers or alloys of propylene (TPO) may also be suitable. Polypropylene polymers are beneficial because they are cost-effective, easy to process and exhibit good mechanical properties.

Polybutene according to the present invention is not limited to a particular type. Preferably the polybutene is polybutene-1. However, other polybutene polymers may also be suitable. Polybutene polymers are beneficial because they are cost-effective and provide good elasticity.

Thermoplastic polyurethane according to the present invention is not limited to a particular type. Preferably the thermoplastic polyurethane is an ester or ether grade. However, other thermoplastic polyurethane may also be suitable. Thermoplastic polyurethanes are beneficial because they have good mechanical properties, especially impact strength as well as excellent thermal retention properties (infrared absorption).

Polyester according to the present invention is not limited to a particular type. Preferably the polyester is polyethylene terephthalate copolymer. However, other polyester may also be suitable. Polyesters are beneficial because they are not only cost-effective, but provide good clarity of the film as well as excellent thermal retention properties (infrared absorption).

The remaining layers of the film are preferably employed to provide the film with physical robustness. Thus, in addition to the aforementioned layer (i) of a polypropylene, polybutene, thermoplastic polyurethane, polyester, or combinations of two or more thereof, the polymeric film according to the invention further comprises (ii) at least one further polymer layer connected thereto. The composition of this layer is such that it is comprised of a material that does not significantly adhere to layer (i) during the production process. Layer (ii) comprises a polymeric material selected from the group consisting of polyethylene, ethylene vinyl acetate copolymer, ethylene butyl acrylate copolymer and combinations of two or more thereof. Other materials suitable for greenhouse applications may also be applicable. The layer (ii) preferably contains greater than 10 wt% of said polymer or polymers, more preferably greater than 50 wt%, even more preferably greater than 75 wt%, most preferably greater than 90% thereof.

Polyethylene according to the present invention is not limited to a particular type. Preferably the polyethylene is low density polyethylene (LDPE) and/or high density polyethylene (HDPE). However, other polyethylene or blends of various polyethylene types may also be suitable.

A preferred combination of polymers in layers (i) and (ii) are polypropylene and polyethylene, respectively. Another preferred combination of polymers in layers (i) and (ii) are polypropylene and low density polyethylene, respectively. Another preferred combination of polymers in layers (i) and (ii) are p polypropylene and high density polyethylene, respectively. Another preferred combination of polymers in layers (i) and (ii) are polybutene and polyethylene, respectively. Another preferred combination of polymers in layers (i) and (ii) are thermoplastic polyurethane and polyethylene, respectively. Another preferred combination of polymers in layers (i) and (ii) are polyester and polyethylene. respectively.

In a preferred aspect of the invention layer (i) comprises less than 20% of the materials employed in layer (ii), preferably less than 10%, even more preferably layer (i) is substantially free of any materials employed in layer (ii). In another preferred aspect layer (ii) comprises less than 20% of the materials employed in layer (i), preferably less than 10%, even more preferably layer (ii) is substantially free of any materials employed in layer (i).

The characterising feature of the film according to the present invention concerns the ability of specific layers to undergo delamination without significantly affecting the structural integrity of the individual layers, or there transparency to sunlight. In particular, (i) the at least one layer comprising a polypropylene, polybutene, thermoplastic polyurethane, polyester, or combinations of two or more thereof and (ii) the at least one further polymer layer have an average delamination strength of less than 250 g/15 mm, more preferably less than 100 g/15 mm, even more preferably less than 75 g/15 mm, most preferably less than 60 g/15 mm. Preferably, no interface of layer (i) with layer (ii) has a delamination strength of greater than 450 g/15 mm, preferably no more than 250 g/15 mm, more preferably no more than 100 g/15 mm, even more preferably no more than 60 g/15 mm. The delamination strength may be determined using a peeling tester (Shimadzu's trade name, EZ-TEST) T-peel test (ASTM D1876) at a speed of 100 mm/min on a test piece of 15 mm width cut from the laminate film. It also preferable that at least 75% of the film area, more preferably 90%, has an average delamination strength as described herein.

The films of the present invention preferably have high luminous transmittance characteristics. The films of the present invention may have low haze characteristics, although this depends on geographical location as higher levels of haze may be desirable in certain areas of the world. Haze and luminous transmittance of the film of the present invention were measured following the ASTM-D1003-92 Standard Test Method for Haze and Luminous Transmittance of Transparent Plastics. This test method covers the evaluation of specific light-transmitting and wide-angle-light-scattering properties of planar sections of materials, such as essentially transparent plastic. A procedure is provided for the measurement of luminous transmittance and haze. Material having a haze value greater than 30% is considered diffusing. In this test method "haze" is defined as the cloudy or turbid aspect or appearance of an otherwise transparent specimen caused by light scattering from within the specimen or from its surfaces. It is measured as the percent of total transmitted light which, in passing through the specimen, deviates from the incident beam through forward scatter by more than 0.044 rad (2.5°) on the average. Luminous transmittance is the ratio of the luminous flux transmitted by a body to the flux incident upon it.

The haze measurements were made by a hazemeter. The luminous transmittance was obtained by placing a clear specimen at a distance from the entrance port of the integrating sphere.

The film of the present invention has a luminous transmittance greater than 30%, preferably greater than 50%, preferably greater than 75%, preferably greater than 85%.

The film of the present invention preferably can exhibit a variable haze that depends on the individual application, for example from 10 to 90%.

The total thickness or gauge of the film is not limited, any film thickness capable of being produced by co-extrusion techniques is applicable. The total thickness of the film, for example, may be from 25 to 1000 µm, preferably from 150 to 600 µm, and even more preferably between 300 and 450 µm. The total width of the film can be from 1 to 30 meters, preferably 4 to 16 meters. Individual layers of the film are preferably from 0.03 to 300 µm each, more preferably from 1 to 200 µm.

The (i) layer or layers comprising polypropylene, polybutene, thermoplastic polyurethane, polyester, or combinations of two or more thereof may have a thickness of from 0.03 to 300 µm, preferably from 1 to 200 µm, more preferably from 2 to 100 µm.

To ensure that the film exhibits good solar properties and in order to improve delamination capability, it will be appreciated by those skilled in the art that additives may be added to any of the layers to improve certain characteristics. This may depend on the proposed use of the film and/or geographical locus. Preferred additives include UV stabilisers, antioxidants, anti-dripping agents, anti-fogging agents, anti-dust agents, IR absorbers or reflectors, nucleating agents, nanocomposites, neutralisers, colour concentrates, slip agents, foaming agents, anti-block agents, anti-statics, and speciality additives for specific applications.

Preferred UV stabilisers include hindered amines, phosphites, benzophenones, benzotriazoles, salicylates, nickel dialkyldithiocarbamates and the like.

Preferred antioxidants include aromatic amines and substituted phenolic compounds. For example, phenyl-β-napthylamine, di-β-napthyl-p-phenylenediamine, butylated hydroxyanisole, di-tert-butyl-p-cresol and propyl gallate.

Preferred IR absorbers or reflectors include calcined clay, silica and hydrotalcite.

Preferred neutralisers include calcium carbonate, calcium stearate and zinc stearate.

Preferred slip agents include silicones, stearamide, oleamide and erucamide. The slip agent may also be employed to facilitate delamination of the polymer layers even further.

Preferred anti-dripping agents include sorbitan esters, ethoxylated sorbitan esters, glycerol esters and fatty acid esters.

Preferred anti-statics include substantially straight-chain and saturated aliphatic tertiary amines, ethoxylated or propoxylated polydiorganosiloxanes, and alkali metal alkanesulfonates.

The polymeric film according to the present invention is produced using known co-extrusion techniques. The film can be the result of blown co-extrusion or cast co-extrusion. In a preferred embodiment, the greenhouse film described herein is produced using blown co-extrusion.

In the case of a co-extrusion blown film, a die is used to take two or more melt streams entering the die and distribute them to a single concentric annular melt stream as uniformly as possible to the die exit, where the film is blown. Any type of die can be used for the present invention, including but not limiting to concentric mandrel dies, conical stacked mandrel dies, modular plate designs and combined dies which combine features of any of the aforementioned die arrangements.

According to the present invention, the film comprising at least two layers and produced by co-extrusion technology, exhibits a layered structure in which at least two of the layers do not significantly adhere to one another. Principally, this is achieved by the relative polymeric compositions of the adjacent layers. However, it is also possible to further prevent adherence of adjacent layers by blowing air between them when the film is undergoing co-extrusion.

After the film has been blown it can be rolled and/or folded as appropriate. This means the resulting product can be easily transported as a rolled laminate structure or as a folded film of desired size. Once transported to the site of erection, the film is unrolled and/or unfolded, brought into association with the relevant greenhouse framework and fixed in place. The layers are separated on one of the sides, a flange is preferably fixed to one or more of the separated layers, depending on the number of layers to be delaminated, and air is blown between to layers to inflate/delaminate the film. The air can be inserted between the layers by any means known in the art, but is preferably achieved using a centrifugal, radial or axial fan blower. The blower may introduce the air at a pressure of less than 20 kPa, preferably less than 15 kPa, more preferably less than 5 kPa, most preferably less than 1.5 kPa. The pressure used should preferably be greater than atmospheric pressure.

In use, the multilayered polymeric film according to the invention contains (i) at least one layer comprising a polypropylene, polybutene, thermoplastic polyurethane, polyester, or combinations of two or more thereof and (ii) at least one further polymer layer, and is characterised in that at least 80% of layer (i) and layer (ii) are delaminated. In a preferable aspect at least 85% of layer (i) and layer (ii) are delaminated, more preferably at least 90%, most preferably at least 95%.

The term "inflated" when used in relation to films is preferably used to mean that at least two layers of the film are separated over at least 50% of their interfaced area with a layer of air. "Inflated" covers films where two or more of the layers are bonded around a portion or the whole of their periphery.

The film may or may not be sealed around the periphery of the film, although in a preferred embodiment the film is substantially unsealed around the periphery. Preferably, the layers (i) and (ii) of the films of the present invention are bonded around less than 90% of their periphery, preferably less than 75%, preferably less than 50%, preferably less than 25%, preferably less than 10%. Bonding of the layers (i) and (ii) around their peripheries may be 0% in a preferred embodiment of the invention. Preferably, "periphery" means the outer 1- to 20 cm edge of the film.

The film of the invention may exhibit various patterns of delamination, wherein certain areas of the film are provided with characteristics that do not allow the film to delaminate. This can be achieved by chemical means, such as by using adhesives or tie-materials, or by heat or plasma treatment of the film in specific areas. Further, this can also be achieved by mechanical blocking of e.g. layer i) at certain points inside the die, thus allowing the other layers to be welded at those points during production. The film can also be affixed to the greenhouse structure in such a way that only certain areas of the film can be delaminated. The film may exhibit regular or irregular tessellations of shapes with up to six sides, or may exhibit symmetrical or asymmetrical arrangements of channels and ridges.

The width of the film can vary in the range of from 1 to 25 meters, preferably from 4 to 16 meters, and the length can vary from 10 to 3000 meters, preferably from 30 to 1000 meters. Nevertheless, it will be appreciated by those skilled in the art that the blown film may be cut into any desired size or shape as required.

The film may be provided with specified fixation points, which facilitate attachment to the agricultural structure. These can be predetermined points of the film. The fixation points, when present, include hooks for suspending the film from a structure and holes with reinforced rims (such as metal reinforced rings) through which bolts, rivets, clips or the like may pass.

The film or sheet of the present invention can be used in association with an agricultural structure or greenhouse. More specifically, it can be used to cover at least a portion of the agricultural structure or greenhouse. Thus, in accordance with an aspect of the present invention, there is provided an agricultural structure or greenhouse, characterised in that the polymeric film (in either laminated or delaminated form) described herein is attached thereto.

In a preferred aspect of the invention, there is provided a multilayered polymeric film for covering an agricultural structure or greenhouse, wherein the film contains (i) at least one layer comprising a polypropylene, polybutene, thermoplastic polyurethane, polyester, or combinations of two or more thereof, and (ii) at least one further polymer layer connected thereto, characterised in that layer (i) and layer (ii) are capable of facile delamination from one another, the at least one further polymer layer (ii) comprises a polymeric material selected from the group consisting of polyethylene, ethylene vinyl acetate copolymer, ethylene butyl acrylate copolymer and combinations of two or more thereof, and layer (i) and layer (ii) have an average delamination strength of less than 100 g/15 mm, preferably less than 75 g/15 mm, even more preferably less than 60 g/15mm.

In another preferred aspect of the invention, there is provided a multilayered polymeric film for covering an agricultural structure or greenhouse, wherein the film contains (i) at least one layer comprising a polypropylene, and (ii) at least one further polymer layer connected thereto, characterised in that layer (i) and layer (ii) are capable of facile delamination from one another, the at least one further polymer layer (ii) comprises a polyethylene, ethylene vinyl acetate copolymer, ethylene butyl acrylate copolymer, or combinations of two or more thereof, and layer (i) and layer (ii) have an average delamination strength of less than 100 g/15 mm, preferably less than 75 g/15 mm, even more preferably less than 60 g/15mm.

In another preferred aspect of the invention, there is provided a multilayered polymeric film for covering an agricultural structure or greenhouse, wherein the film contains (i) at least one layer comprising a polypropylene, polybutene, thermoplastic polyurethane, polyester, or combinations of two or more thereof and (ii) at least one further polymer layer connected thereto, layer (ii) comprises a polymeric material selected from the group consisting of polyethylene, ethylene vinyl acetate copolymer, ethylene butyl acrylate copolymer or combinations of two or more thereof, the film has a luminous transmittance greater than 30%, layer (i) and layer (ii) have an average delamination strength of less than 100 g/15 mm, preferably less than 75 g/15 mm, even more preferably less than 60 g/15mm and the total thickness of the film is from 25 to 1000 µm, preferably from 150 to 600 µm and that the total width of the film is from 1 to 30 metres.

In yet another preferred aspect of the invention, there is provided a multilayered polymeric film for covering an agricultural structure or greenhouse, wherein the film contains (i) at least one layer comprising a polypropylene, polybutene, thermoplastic polyurethane, polyester, or combinations of two or more thereof and (ii) at least one further polymer layer connected thereto, layer (ii) comprises a polymeric material selected from the group consisting of polyethylene, ethylene vinyl acetate copolymer, ethylene butyl acrylate copolymer or combinations of two or more thereof, the film has a luminous transmittance greater than 30%, the film further comprises chemical or mineral additives selected from the group consisting of UV stabilisers, antioxidants, anti-dripping agents, anti-fogging agents, anti-dust agents, IR absorbers, nucleating agents, slip agents, nanocomposites and combinations of two or more thereof, and layer (i) and layer (ii) have an average delamination strength of less than 100 g/15 mm, preferably less than 75 g/15 mm, even more preferably less than 60 g/15mm.

In a final aspect of the present invention, there is provided an alternative use of the multilayered polymeric film as a container liner for packaging applications. In this aspect, the film may be delaminated and inflated with gas to provide a multilayered liner in which the layered structure ensures the packaging is less sensitive to external damage (e.g. penetration) and minimizes the risk of contents spoiled. The insertion of gas between the layers further provides cushioning for any stresses the package may undergo, for example in transit to the marketplace.

The disclosure of separate embodiments and preferred features is not intended to be limiting. Separately disclosed embodiments, aspects and preferred features may be read together in combination and recited features may be interchangeable.

### Examples

Examples of film structures that can be employed in accordance with the invention are shown below.

### Example 1

| **LAYER** | **MATERIAL** | **COMMERCIAL TYPE (SUPPLIER)** | **THICKNESS (µm)** |
|---|---|---|---|
| A, inner | LDPE, 0.3 MFI | Riblene FC39 (Versalis) | 60 |
| B | LDPE, 0.3 MFI | Riblene FC39 (Versalis) | 115 |
| C | LDPE, 0.3 MFI | Riblene FC39 (Versalis) | 25 |
| D | PP random copolymer | Borclear RB707CF (Borealis) | 25 |
| E | LDPE, 0.3 MFI | Riblene FC39 (Versalis) | 25 |
| F | LDPE, 0.3 MFI | Riblene FC39 (Versalis) | 25 |
| G, outer | LDPE, 0.3 MFI | Riblene FC39 Versalis () | 25 |
| Total thickness 300 µm | | | |

Same test was conducted with different type of PP, Borealis Borclear RB709CF (all other parameters were the same).

The film can be delaminated between layer C and layer D as well as between D and E since both layers C and E contain LDPE.

### Example 2

| **LAYER** | **MATERIAL** | **COMMERCIAL TYPE (SUPPLIER)** | **THICKNESS (µm)** |
|---|---|---|---|
| A, inner | 70%LDPE, 0.3 MFI+30%LLDPE, 1 MFI | LD: Riblene FC39 (Versalis), LL: Lotrene Q1018N (Total Petrochemicals) | 60 |
| B | 70%LDPE, 0.3 MFI+30%LLDPE, 1 MFI | LD: Riblene FC39 Versalis (), LL: Lotrene Q1018N (Total Petrochemicals) | 105 |
| C | LDPE, 0.3 MFI | Riblene FC39 (Versalis) | 30 |
| D | PP random copolymer | Moplen RP241 H (Lyondell Basell) | 15 |
| E | EVA 18% VA+TIE RESIN | EVA: Greenflex FD50 (Versalis) | 30 |
| F | 70%LDPE, 0.3 MFI+30%LLDPE, 1 MFI | LD: Riblene FC39 (Versalis), LL: Lotrene Q1018N (Total Petrochemicals) | 30 |
| G, outer | 70%LDPE, 0.3 MFI+30%LLDPE, 1 MFI | LD: Riblene FC39 (Versalis), LL: Lotrene Q1018N (Total Petrochemicals) | 30 |
| Total thickness 300 µm | | | |

The above film was delaminated between layers C and D.

Further to the above structures which have already been produced and tested in our 7 layer lab line, we have also some examples in seven, five and three layers:

### Example 3

| |
|---|
| A : LLDPE 45mic. |
| B : LLDPE 90 mic. |
| C : LDPE 45 mic. |
| D : PP 20 mic. |
| E : EVA (18% VA) + tie 25 mic. |
| F : EVA (18% VA) 50 mic. |
| G : EVA (4% VA) 25 mic. |

Layers A+B+C are delaminated and form the external layer of the greenhouse, while layers D+E+F+G form the internal layer of the greenhouse.

### Example 4

| |
|---|
| A : LLDPE 100 mic. |
| B : LDPE 50 mic. |
| C : PP 25 mic. |
| D : EVA (18% VA) + tie 50 mic. |
| E : PP 25 mic. |
| F : LDPE 50 mic. |
| G : EVA (9% VA) 75 mic. |

In this structure which is specially designed for triple inflated greenhouses, layers A+B are delaminated and form the external layer of the greenhouse , layers C+D+E form the middle layer and layers F+G form the internal layer of the greenhouse.

### Example 5

| |
|---|
| A : LLDPE+ tie 180 mic. |
| B : PP 20 mic. |
| C : LDPE 100 mic. |

Layers A+B are delaminated and form the external layer of the greenhouse while layer C forms the internal layer on the greenhouse.

### Example 6

| |
|---|
| A : MLLDPE 120 mic. |
| B : LDPE 60 mic. |
| C : PP 20 mic. |
| D : EVA (18% VA) + tie 50 mic. |
| E : EVA (4% VA) 50 mic. |

Layers A+B are delaminated and form the external layer of the greenhouse while layers C+D+E form the internal layer on the greenhouse.

The above structures are indicative as to the kind of materials per layer, the number and thickness of the layers and of the whole film. Each of the layers can contain blends of different materials as well as different chemical or mineral additives, such as UV stabilizers, antioxidants, anti-dripping agents, anti-fogging agents, anti-dust agents, IR absorbers or reflectors, nucleating agents, nanocomposites, neutralisers, colour concentrates, slip agents, anti-statics, and speciality additives for specific applications.

## Claims

1. A multilayered polymeric film for covering an agricultural structure or greenhouse, wherein the film contains:
(i) at least one layer comprising a polypropylene, polybutene, thermoplastic polyurethane, polyester, or combinations of two or more thereof, and
(ii) at least one further polymer layer connected thereto,
**characterised in that** layer (i) and layer (ii) have an average delamination strength of less than 250 g/15 mm when measured using ASTM D-1876;
the at least one further polymer layer (ii) comprises a polymeric material selected from the group consisting of polyethylene, ethylene vinyl acetate copolymer, ethylene butyl acrylate copolymer and combinations of two or more thereof; and
the film has a luminous transmittance greater than 30% when measured using ASTM-D1003-92.

2. A multilayered polymeric film comprising three or more layers for covering an agricultural structure or greenhouse, wherein the film contains:
(i) at least one layer comprising a polypropylene, polybutene, thermoplastic polyurethane, polyester, or combinations of two or more thereof, and
(ii) at least one further polymer layer connected thereto,
**characterised in that** layer (i) and layer (ii) have an average delamination strength of less than 250 g/15 mm when measured using ASTM D-1876;
the at least one further polymer layer (ii) comprises a polymeric material selected from the group consisting of polyethylene, ethylene vinyl acetate copolymer, ethylene butyl acrylate copolymer and combinations of two or more thereof; and
the film has a luminous transmittance greater than 30% when measured using ASTM-D1003-92,
wherein the multi-layered polymeric film comprises three layers of which at least two of them are capable of being delaminated and wherein layer (i) is in the middle of these three layers.

3. The polymeric film according to claim 1 or 2, wherein layer (i) comprises random copolymer polypropylene.

4. The polymeric film according to any preceding claim, **characterised in that** at least 50% of layer (i) and layer (ii) are delaminated from one another, preferably 80%, and most preferably at least 95%.

5. The polymeric film according to any preceding claim, wherein two or more of the layers are bonded around a portion or the whole of their periphery.

6. The polymeric film according to claim 5, wherein the periphery is the outer 1 to 20 cm edge of the film.

7. The polymeric film according to any preceding claim, wherein the film comprises areas which do not delaminate.

8. The polymeric film according to claim 7, wherein the areas of film that do not delaminate comprise adhesive or tie materials, or wherein the areas of film that do not delaminate have been heat treated or plasma treated or subjected to mechanical blocking.

9. The polymeric film according to any preceding claim, **characterised in that** layer (i) comprising the polypropylene, polybutene, thermoplastic polyurethane, polyester, or combinations of two or more thereof contains greater than 20 wt% of said polymer, preferably greater than 50 wt%, more preferably greater than 75 wt%.

10. The polymeric film according to any preceding claim, **characterised in that** layer (ii) contains greater than 10 wt% of said polymer or polymers, preferably greater than 50 wt%.

11. The polymeric film according to any preceding claim, **characterised in that** layer (i) comprising at least one polymer selected from the group consisting of polypropylene, polybutene, thermoplastic polyurethane, polyester, and combinations of two or more thereof, has a thickness of from 0.03 to 300 µm, preferably from 1 to 200 µm, the total thickness of the film is from 25 to 1000 µm, preferably from 150 to 600 µm, and the total width of the film is from 1 to 30 metres.

12. The polymeric film according to any preceding claim, **characterised in that** the film further comprises from 1 to 20 additional layers, preferably 1 to 10 additional layers, even more preferably 3, 4, 5, 6, or 7 additional layers.

13. The polymeric film according to any preceding claim, **characterised in that** the film further contains tie resins and/or one or more chemical or mineral additives selected from the group consisting of tie concentrates, UV stabilisers, antioxidants, anti-dripping agents, anti-fogging agents, anti-dust agents, IR absorbers, nucleating agents, slip agents, anti-block agents, foaming agents and nanocomposites.

14. The polymeric film according to any preceding claim, **characterised in that** the film is obtainable by blown or cast co-extrusion.

15. The use of the polymeric film or sheet according to any preceding claim in combination with an agricultural structure or greenhouse, wherein the film is used to cover at least a portion of the agricultural structure or greenhouse.

16. An agricultural structure or greenhouse, **characterised in that** at least a portion thereof is covered with a polymeric film according to any of claims 1 to 14.

17. A method of covering an agricultural structure or greenhouse with the polymeric film according any of claims 1 to 14, comprising the step of inserting gas between the (i) at least one layer comprising a polypropylene, polybutene, thermoplastic polyurethane, polyester, or combinations of two or more thereof, and the (ii) at least one further polymer layer.

18. The method of covering an agricultural structure or greenhouse according to claim 17, **characterised in that** the gas, preferably atmospheric air, is inserted between layers (i) and (ii) at a pressure of less than 20 kPa, preferably less than 15 kPa.

19. Use of the polymeric film according to any of claims 1 to 14 as a container liner for packaging applications.

## Patentansprüche

1. Eine vielschichtige Polymerfolie zum Abdecken einer landwirtschaftlichen Struktur oder eines Gewächshauses, wobei die Folie beinhaltet:
(i) wenigstens eine Schicht, die ein Polypropylen, Polybuten, thermoplastisches Polyurethan, Polyester oder Kombinationen von zwei oder mehr davon umfasst, und
(ii) wenigstens eine weitere damit verbundene Polymerschicht,
**dadurch gekennzeichnet, dass** die Schicht (i) und die Schicht (ii) eine durchschnittliche Ablösungsfestigkeit von weniger als 250 g/15 mm, wenn mittels ASTM D-1876 gemessen, aufweisen;
die wenigstens eine weitere Polymerschicht (ii) ein Polymermaterial umfasst, das aus der Gruppe selektiert wurde, die aus Polyethylen, Ethylen-Vinylacetat-Copolymer, Ethylen-Butylacrylat-Copolymer und Kombinationen von zwei oder mehr davon besteht; und
die Folie einen Lichttransmissionsgrad größer als 30%, wenn mittels ASTM-D1003-92 gemessen, aufweist.

2. Vielschichtige Polymerfolie, die drei oder mehr Schichten zum Abdecken einer landwirtschaftlichen Struktur oder eines Gewächshauses umfasst, wobei die Folie umfasst:
(i) wenigstens eine Schicht, die ein Polypropylen, Polybuten, thermoplastisches Polyurethan, Polyester oder Kombinationen von zwei oder mehr davon umfasst, und
(ii) wenigstens eine weitere damit verbundene Polymerschicht,
**dadurch gekennzeichnet, dass** die Schicht (i) und die Schicht (ii) eine durchschnittliche Ablösungsfestigkeit von weniger als 250 g/15 mm, wenn mittels ASTM D-1876 gemessen, aufweisen;
die wenigstens eine weitere Polymerschicht (ii) ein Polymermaterial umfasst, das aus der Gruppe selektiert wurde, die aus Polyethylen, Ethylen-Vinylacetat-Copolymer, Ethylen-Butylacrylat-Copolymer und Kombinationen von zwei oder mehr davon besteht; und
die Folie eine Lichtdurchlässigkeit größer als 30% bei Messung mittels ASTM-D1003-92 aufweist,
wobei die vielschichtige Polymerfolie drei Schichten umfasst, von denen wenigstens zwei fähig sind, in Schichten gespalten zu werden und, wobei sich die Schicht (i) in der Mitte dieser drei Schichten befindet.

3. Polymerfolie gemäß Anspruch 1 oder 2, wobei die Schicht (i) Polypropylen-Random- Copolymer umfasst.

4. Polymerfolie gemäß einem vorhergehenden Anspruch, **dadurch gekennzeichnet, dass** wenigstens 50% der Schicht (i) und der Schicht (ii) vorzugsweise 80% und am meisten bevorzugt wenigstens 95% von einander in Schichten gespaltet sind.

5. Polymerfolie gemäß einem vorhergehenden Anspruch, wobei zwei oder mehr der Schichten um einen Abschnitt oder die Ganzheit ihres Umfangs herum geklebt sind.

6. Polymerfolie gemäß Anspruch 5, wobei der Umfang der äußere 1 bis 20 cm Rand der Folie ist.

7. Polymerfolie nach einem vorhergehenden Anspruch, wobei die Folie Bereiche umfasst, die sich nicht spalten.

8. Polymerfolie nach Anspruch 7, wobei die sich nicht spaltenden Bereiche der Folie Klebstoff oder Bindematerialien umfassen, oder wobei die sich nicht spaltenden Bereiche der Folie einer Wärmebehandlung oder Plasmabehandlung oder mechanischer Blockierung unterzogen worden sind.

9. Polymerfolie nach einem vorhergehenden Anspruch, **dadurch gekennzeichnet, dass** die Schicht (i), welche das Polypropylen, Polybuten, thermoplastische Polyurethan, Polyester oder Kombinationen von zwei oder mehr davon umfasst, größer als 20 Gew.-% des Polymers, vorzugsweise größer als 50 Gew.-%, noch bevorzugter größer als 75 Gew.-% enthält.

10. Polymerfolie gemäß einem vorhergehenden Anspruch, **dadurch gekennzeichnet, dass** die Schicht (ii) größer als 10 Gew.-% des Polymers oder der Polymere, vorzugsweise größer als 50 Gew.-% enthält.

11. Polymerfolie gemäß einem vorhergehenden Anspruch, **dadurch gekennzeichnet, dass** die Schicht (i) wenigstens ein Polymer umfasst, das aus der Gruppe selektiert wurde, die aus Polypropylen, Polybuten, thermoplastischem Polyurethan, Polyester und Kombinationen von zwei oder mehr davon besteht, eine Stärke von 0,03 bis 300 µm, vorzugsweise von 1 bis 200 µm aufweist, die Gesamtstärke der Folie von 25 bis 1000 µm, vorzugsweise von 150 bis 600 µm beträgt und die Gesamtbreite der Folie von 1 bis 30 Meter beträgt.

12. Polymerfolie gemäß einem vorhergehenden Anspruch, **dadurch gekennzeichnet, dass** die Folie ferner von 1 bis 20 zusätzliche Schichten, vorzugsweise 1 bis 10 zusätzliche Schichten, selbst noch bevorzugter 3, 4, 5, 6 oder 7 zusätzliche Schichten umfasst.

13. Polymerfolie gemäß einem vorhergehenden Anspruch, **dadurch gekennzeichnet, dass** die Folie ferner Bindeharze und/oder einen oder mehr chemische oder mineralische Klebstoffe enthält, die aus der Gruppe selektiert wurden, die aus Bindekonzentraten, UV-Stabilisierungsmitteln, Antioxidationsmitteln, Antitropfinitteln, Antiverschleierungsmitteln, Antistaubmitteln, IR-Absorbiermitteln, Keimbildnern, Gleitmitteln, Antiblockiermitteln, Schaumbildungsmitteln und Nanoverbundmaterialien bestehen.

14. Polymerfolie gemäß einem vorhergehenden Anspruch, **dadurch gekennzeichnet, dass** die Folie durch geblasene oder gegossene Coextrusion erhältlich ist.

15. Verwendung der Polymerfolie oder -bahn gemäß einem vorhergehenden Anspruch in Kombination mit einer landwirtschaftlichen Struktur oder einem Gewächshaus, wobei die Folie dazu verwendet wird, wenigstens einen Abschnitt der landwirtschaftlichen Struktur oder des Gewächshauses abzudecken.

16. Landwirtschaftliche Struktur oder Gewächshaus, **dadurch gekennzeichnet, dass** wenigstens ein Abschnitt davon mit einer Polymerfolie gemäß einem der Ansprüche 1 bis 14 abgedeckt ist.

17. Verfahren zum Abdecken einer landwirtschaftlichen Struktur oder eines Gewächshauses mit einer Polymerfolie nach einem der Ansprüche 1 bis 14, das den Schritt der Einfügung von Gas zwischen die (i) wenigstens eine Schicht umfasst, die ein Polypropylen, Polybuten, thermoplastisches Polyurethan, Polyester oder Kombinationen von zwei oder mehr davon umfasst und die (ii) wenigstens eine weitere Polymerschicht.

18. Verfahren zum Abdecken einer landwirtschaftlichen Struktur oder eines Gewächshauses gemäß Anspruch 17, **dadurch gekennzeichnet, dass** das Gas, vorzugsweise atmosphärische Luft, zwischen die Schichten (i) und (ii) mit einem Druck von weniger als 20 kPa, vorzugsweise weniger als 15 kPa eingefügt wird.

19. Verwendung der Polymerfolie nach einem der Ansprüche 1 bis 14 als eine Behälterauskleidung für Verpackungsanwendungen.

## Revendications

1. Film polymère multicouches pour la couverture d'une structure ou d'une serre agricole, le film contenant :
(i) au moins une couche comprenant un polypropylène, un polybutène, un polyuréthane thermoplastique, un polyester ou des combinaisons de deux ou plus de ceux-ci et
(ii) au moins une couche polymère supplémentaire liée à celle-ci,
**caractérisé en ce que** la couche (i) et la couche (ii) ont une force moyenne de délaminage inférieure à 250 g/15 mm quand mesurée en utilisant la méthode ASTM D-1876 ;
la au moins une couche polymère supplémentaire (ii) comprend un matériau polymère sélectionné dans le groupe consistant en un polyéthylène, un copolymère d'acétate de vinyle et d'éthylène, un copolymère d'acrylate de butyle et d'éthylène et des combinaisons de deux ou plus de ceux-ci ; et
le film a une transmission lumineuse supérieure à 30 % quand mesurée en utilisant la méthode ASTM-D1003-92.

2. Film polymère multicouches comprenant trois couches ou plus pour la couverture d'une structure ou d'une serre agricole, le film contenant :
(i) au moins une couche comprenant un polypropylène, un polybutène, un polyuréthane thermoplastique, un polyester ou des combinaisons de deux ou plus de ceux-ci et
(ii) au moins une couche polymère supplémentaire liée à celle-ci, **caractérisé en ce que** la couche (i) et la couche (ii) ont une force moyenne de délaminage inférieure à 250 g/15 mm quand mesurée en utilisant la méthode ASTM D-1876 ;
la au moins une couche polymère supplémentaire (ii) comprend un matériau polymère sélectionné dans le groupe consistant en un polyéthylène, un copolymère d'acétate de vinyle et d'éthylène, un copolymère d'acrylate de butyle et d'éthylène et des combinaisons de deux ou plus de ceux-ci ; et
le film a une transmission lumineuse supérieure à 30 % quand mesurée en utilisant la méthode ASTM-D1003-92,
où le film polymère multicouches comprend trois couches dont au moins deux peuvent subir un délaminage et où la couche (i) est au milieu de ces trois couches.

3. Film polymère selon la revendication 1 ou 2, où la couche (i) comprend un copolymère aléatoire de polypropylène.

4. Film polymère selon l'une quelconque des revendications précédentes, **caractérisé en ce qu'**au moins 50 % de la couche (i) et de la couche (ii) sont séparées l'une de l'autre par délaminage, préférablement 80 % et plus préférablement au moins 95 %.

5. Film polymère selon l'une quelconque des revendications précédentes, où deux ou plus des couches sont liées autour d'une partie ou de la totalité de leur périphérie.

6. Film polymère selon la revendication 5, où la périphérie est la bordure externe de 1 à 20 cm du film.

7. Film polymère selon l'une quelconque des revendications précédentes, le film comprenant des zones qui ne subissent pas un délaminage.

8. Film polymère selon la revendication 7, où les zones du film qui ne subissent pas un délaminage comprennent des matériaux adhésifs ou liants ou où les zones du film qui ne subissent pas un délaminage ont pas été soumises à un traitement à chaud ou par plasma ou à un blocage mécanique.

9. Film polymère selon l'une quelconque des revendications précédentes, **caractérisé en ce que** la couche (i) comprenant le polypropylène, le polybutène, le polyuréthane thermoplastique, le polyester ou des combinaisons de deux ou plus de ceux-ci contient plus de 20 % en poids dudit polymère, préférablement plus de 50 % en poids et plus préférablement plus de 75 % en poids.

10. Film polymère selon l'une quelconque des revendications précédentes, **caractérisé en ce que** la couche (ii) contient plus de 10 % en poids dudit polymère ou desdits polymères, préférablement plus de 50 % en poids.

11. Film polymère selon l'une quelconque des revendications précédentes, **caractérisé en ce que** la couche (i) comprenant au moins un polymère sélectionné dans le groupe consistant en un polypropylène, un polybutène, un polyuréthane thermoplastique, un polyester et des combinaisons de deux ou plus de ceux-ci a une épaisseur qui va de 0,03 à 300 µm et préférablement de 1 à 200 µm, l'épaisseur totale du film allant de 25 à 1 000 µm et préférablement de 150 à 600 µm et la largeur totale du film allant de 1 à 30 mètres

12. Film polymère selon l'une quelconque des revendications précédentes, **caractérisé en ce que** le film comprend de 1 à 20 couches supplémentaires, préférablement de 1 à 10 couches supplémentaires, encore plus préférablement 3, 4, 5, 6 ou 7 couches supplémentaires.

13. Film polymère selon l'une quelconque des revendications précédentes, **caractérisé en ce que** le film contient en outre des résines liantes et/ou un ou plusieurs additifs chimiques ou minéraux sélectionnés dans le groupe consistant en des concentrés liants, stabilisants UV, antioxydants, agents anti-gouttage, agents anti-buée, agents anti-poussière, absorbeurs IR, agents nucléants, agents glissants, agents anti-bloc, agents moussants et nanocomposites.

14. Film polymère selon l'une quelconque des revendications précédentes, **caractérisé en ce que** le film peut être obtenu par coextrusion-gonflage ou par coextrusion-coulée.

15. Utilisation du film ou de la feuille polymère selon l'une quelconque des revendications précédentes en combinaison avec une structure ou une serre agricole, où le film est utilisé pour couvrir au moins une partie de la structure ou de la serre agricole.

16. Structure ou serre agricole, **caractérisée en ce qu'**au moins une partie de celle-ci est couverte avec un film polymère selon l'une quelconque des revendications 1 à 14.

17. Méthode de couverture d'une structure ou d'une serre agricole avec le film polymère selon l'une quelconque des revendications 1 à 14, qui comprend l'étape d'insertion d'un gaz entre (i) au moins une couche comprenant un polypropylène, un polybutène, un polyuréthane thermoplastique, un polyester ou des combinaisons de deux ou plus de ceux-ci et (ii) au moins une couche polymère supplémentaire.

18. Méthode de couverture d'une structure ou d'une serre agricole selon la revendication 17, **caractérisée en ce que** le gaz, préférablement l'air atmosphérique, est inséré entre les couches (i) et (ii) à une pression inférieure à 20 kPa, préférablement inférieure à 15 kPa.

19. Utilisation du film polymère selon l'une quelconque des revendications 1 à 14 en tant qu'enveloppe intérieure de conteneurs pour des applications d'emballage.
